# EUROPÄISCHE PATENTSCHRIFT

(11) **EP 1 242 479 B1**
(45) Veröffentlichungstag und Bekanntmachung des Hinweises auf die Patenterteilung: **11.08.2004**
(21) Anmeldenummer: 00974537.3
(22) Anmeldetag: 15.11.2000
(51) Int. Cl.: C08F 10/06

(54) **HOCHMOLEKULARES POLYPROPYLEN MIT BREITER MOLEKULARGEWICHTSVERTEILUNG UND GERINGER ISOTAKTISCHER SEQUENZLÄNGE**
HIGH-MOLECULAR POLYPROPYLENE WITH A BROAD DISTRIBUTION OF THE MOLECULAR WEIGHT AND A SHORT ISOTACTIC SEQUENCE LENGTH
POLYPROPYLENE MACROMOLECULAIRE AYANT UNE REPARTITION IMPORTANTE DE LA MASSE MOLECULAIRE ET UNE LONGUEUR SEQUENTIELLE ISOTACTIQUE FAIBLE

(30) Priorität: 29.11.1999 DE 19957384
(43) Veröffentlichungstag der Anmeldung: 25.09.2002
(73) Patentinhaber: Basell Polyolefine GmbH, 50389 Wesseling (DE)
(72) Erfinder: DOLLE, Volker, D-64625 Bensheim (DE); FRAAIJE, Volker, 60325 Frankfurt (DE); TERWYEN, Herbert, 65934 Frankfurt (DE); BOEHM, Thomas, 64291 Darmstadt (DE)
(86) Internationale Anmeldenummer: PCT/EP2000/011278
(87) Internationale Veröffentlichungsnummer: WO 2001/040327

(56) Entgegenhaltungen:
- EP-A- 0 926 164
- DE-A- 4 125 135
- DE-A- 19 606 167
- DE-A- 19 621 022

## Beschreibung

### Die vorliegende Erfindung betrifft

Propylenpolymere mit 0 bis 2.5 Gew.-% C2- bis C10-Olefin-Comonomeren, einem Mw von 350.000 bis 1.000.000 g/mol, einem Mw/Mn von 4 bis 10 einem Gewichts-Anteil der Polymerfraktion, mit einer Viskositätszahl von 500 bis 1400 ml/g von 20 bis 80 % am Gesamtpolymeren und einer Polymerfraktion mit einer Viskositätszahl 200 bis 400 ml/g, von 80 bis 20 % am Gesamtpolymeren und einer isotaktischen Sequenzlänge von 50 bis 100.

Weiterhin betrifft die vorliegende Erfindung die Verwendung derartiger Propylenpolymerer (im folgenden "erfindungsgemäße Propylenpolymere") zur Herstellung von Fasern, Folien und Formkörpern - insbesondere zur Herstellung von Rohren mit hoher Zeitstandsinnendruckfestigkeit (Zeitstandsinnendruckfestigkeit, im folgenden "ZST" genannt) -, die Fasern, Folien und Formkörper - insbesondere die Rohre mit hoher ZST - aus den erfindungsgemäßen Propylenpolymeren und die Verwendung der Formkörper - insbesondere der Rohre mit hoher ZST - im chemischen Apparatebau, als Trinkwasserrohr, als Abwasserrohr.

Hochmolekulare Propylenpolymere können mit gewöhnlichen Ziegler-Katalysatoren auf Basis Titanverbindung/Aluminiumalkyl hergestellt werden, wie beispielsweise in DE-A 40 19 053 beschrieben wird. Unter hochmolekularen Propylenpolymeren versteht man üblicherweise solche Propylenpolymere die ein Molekulargewicht Mw., gemessen nach der Methode (GPC Gelpermeationschromatographie) von mehr als ca. 500.000 g/mol und eine damit korrelierende Melt Flow Rate bei 230 °C und einem Auflagegewicht von 5 kg (MFR 230/5, gemessen nach ISO 1133) von mindesten ca. 3 dg/min haben. Im Gegensatz hierzu haben übliche Propylenpolymere ein Mw von ca. 100.000 g/mol bis ca. 300.000 g/mol und damit korrelierend einen MFR (230/5) von mehr als 4 dg/min.

Die mit Ziegler Katalysatoren erhältlichen hochmolekularen Propylenpolymere (im folgenden "hochmolekulare Ziegler-Propylenpolymerisate") haben in der Regel eine große mittlere Länge von isotaktischen Sequenzen "n-iso" (gemessen mit der 13C-NMR-Methode gemäß Zambelli et al. Macormolecules 8, 687-689(1975), üblicherweise liegt der Wert über 100. Weitere Eigenschaften derartiger hochmolekularer Ziegler-Propylenpolymerisate sind ein verhältnismäßig hoher Anteil von in Xylol löslichen Substanzen "Xl-Wert" (Xl-Wert bestimmt wie in den Beispielen beschrieben) und ein verhältnismäßig hoher Schmelzpunkt von in der Regel mehr als 160 °C (bestimmt mit der Methode der DSC, wie in den Beispielen beschrieben) . Solche hochmolekularen Ziegler-Propylenpolymerisate zeichnen sich dann bei der Verarbeitung, zum Beispiel in der Extrusion, zu geformten Artikeln, wie Rohre etc., durch schlechte Verarbeitbarkeit (insbesondere schlechte Fließfähigkeit) aus, und die hergestellten Artikel haben oft schlechte organoleptische Eigenschaften (Geruch, Geschmack). Die unbefriedigenden organoleptischen Eigenschaften werden, nach derzeitigem Kenntnisstand, durch niedermolekulare, ölige Propylen-Oligomere hervorgerufen.

Die unzureichende Verarbeitbarkeit der hochmolekularen Ziegler (Homo) Propylenpolymere probiert man üblicherweise dadurch zu umgehen, daß man auf hochmolekulare Ziegler Propylen-Olefih-Copolymere ausweicht, die einen niedrigeren Schmelzpunkt haben und daher bei bestimmten Temperaturen in der Extrusion leichter fließen als die analogen Homopolymere. Jedoch finden sich in den Copolymeren vermehrt leicht lösliche Propylenoligomeren und daraus resultieren wiederum hohe x-ylollösliche Anteile und nachteilige organoleptische Eigenschaften der hochmolekularen Ziegler-Propylen-Copolymeren.

Zudem haben die Rohre, die aus hochmolekularen Ziegler-Propylenpolymeren, beispielsweise solchen analog DE-A 40 19 053, hergestellt wurden eine hohe Brüchigkeit (geringe ZST) und eine rauhe (Innen)Oberfläche. Die rauhe Oberfläche bietet Flüssigkeiten nach derzeitigem Kenntnisstand eine große Angriffsfläche, und die Flüssigkeiten laugen den im Rohr enthaltenen Polymer-Stabilisator aus, welches wiederum die ZST der Rohre verringert.

Aufgabe der vorliegenden Erfindung war es, Propylenpolymerisate zu finden, die sich mit herkömmlichen Fertigungswerkzeugen leicht zu Formkörpern, insbesondere Rohren, verarbeiten lassen (unter anderem durch verbesserte Fließfähigkeit), die neben einer niedrigen Brüchigkeit und einer glatten Oberfläche zusätzlich eine hohe Zähigkeit und eine gute Steifigkeit in Verbindung mit einer guten ZST der Formkörper, insbesondere Rohre, haben.

Demgemäß wurden die erfindungsgemäßen Propylenpolymere, die Verwendung derartiger Propylenpolymerer zur Herstellung von Fasern, Folien und Formkörpern, die Fasern, Folien und Formkörper aus den erfindungsgemäßen Propylenpolymeren und die Verwendung der Rohre für den Einsatz im chemischen Apparatebau, als Trinkwasserrohr, als Abwasserrohr gefunden.

Die erfindungsgemäßen Propylenpolymeren werden in der Regel durch mindestens zweistufige Polymerisation (sogenannte Kaskaden-Fahrweise) von Propylen mit 0 bis 2.5 Gew. % C2-C10-Olefin-Comonomeren, vorzugsweise 0 bis 1.5 Gew.-% C2-C10-Olefin-Comonomeren und insbesondere 0 bis 1 Gew.% C2-C10-Olefin-Comonomeren in Gegenwart von Metallocenkatalysatorsystemen (wie nachstehend beschrieben) erhalten.

Als C2-C10-Olefin-Comonomeren kommen in Betracht, Ethylen, 1-Buten, 1-Penten, 1-Hexen, 1-Hepten, 1-Octen, 1-Nonen oder 1-Decen. Es können mehrere Comonomere oder auch nur ein Comonomer mit Propylen copolymerisiert werden. Die oben genannten Gew.-% beziehen sich dann auf die Summe der Comonomeren. Bevorzugte C2-C10-01efincomonomere sind Ethylen, 1-Buten und 1-Hexen. Bevorzugte Propylen-Olefin-Copolymere sind Propylen-Ethylen-Copolymere, Propylen-1-Buten-Copolymere, Propylen-Ethylen-1-Buten-Terpolymere. Die summarische Menge der Comonomeren liegt auch in diesen Fällen im Bereich von 0,1 bis 2.5 Gew.-% vorzugsweise im Bereich von 0,1 bis 1.5 Gew.-%, insbesondere im Bereich von 0,1 bis 1 Gew.-%.

Die Polymerisatinsreaktionen, in der Regel mindestens zweistufig, können grundsätzlich in allen geeigneten Olefin-Polymerisationsverfahren kontinuierlich oder diskontinuierlich ausgeführt werden. Sie können in der Gasphase, beispielsweise im WirbelschichtReaktor oder gerührten Gasphase, in flüssigem Monomeren, in Lösung oder in Suspension in den dafür geeigneten Reaktionskesseln oder in Schlaufenreaktoren durchgeführt werden. Die Polymerisationstemperatur liegt üblicherweise im Bereich von 0 bis 150 °C, vorzugsweise im Bereich von 30 bis 100 °C, der Druck im Bereich von 5 bis 500 bar, vorzugsweise 10 bis 100 bar, und die mittlere Verweilzeit im Bereich von 0,5 h bis 6 h, vorzugsweise 0.5 bis 4 h.

Ein gut geeignetes Polymerisationsverfahren ist das zweistufige Masse-Polymerisationsverfahren.

Hierzu wird in der ersten Reaktionsstufe ein hochmolekulares Propylenhomopolymer oder -copolymer, der Zusammensetzung wie oben beschrieben, vorzugsweise ein Propylenhomopolymer, mit einer Viskosität von 500 bis 1400 ml/g (bestimmt nach der in den Beispielen offenbarten Methode) und einem Anteil am Gesamtpolymeren von 20 bis 80 Gew.-%, vorzugsweise von 45 bis 75 Gew.-%, besonders bevorzugt von 48 Gew. bis 65 Gew. %, hergestellt, während in der zweiten, üblicherweise nachgeschalteten Reaktionsstufe ein niedermolekulares Propylenhomopolymer oder -copolymer der Zusammensetzung wie oben beschrieben, vorzugsweise Propylenhomopolymer, mit einer Viskosität von 200 bis 400 ml/g und einem Anteil von 20 bis 80 Gew.-%, vorzugsweise von 25 bis 55 Gew.-%, besonders bevorzugt von 35 bis 52 Gew. %, hergestellt wird.

Die erste und die zweite Reaktionsstufe können in diskontinuierlicher oder auch kontinuierlicher Betriebsweise ausgeführt werden. Bevorzugt wird die kontinuierliche Betriebsweise.In der ersten Polymerisationsstufe wird im allgemeinen in flüssigem Propylen bei einer Temperatur von 55 bis 100 °C und einer Verweilzeit von 0,5 bis 3,5 h polymerisiert. Es wird üblicherweise ein Phasenverhältnis im Bereich von 2,5 bis 4 1 flüssiges Propylen pro kg PP, vorzugsweise von 3,3 1 flüssiges Propylen pro kg PP eingestellt. Zur Molmassenregelung wird in der Regel Wasserstoff eindosiert.

Nach der ersten Reaktionsstufe wird das mehrphasige System im allgemeinen in die zweite Reaktionsstufe überführt und dort bei einer Temperatur von 55 bis 100 °C polymerisiert. Die zweite Reaktionsstufe findet in der Regel in einem zweiten Reaktor statt. Dort wird üblicherweise ein Phasenverhältnis von 1 bis 2,5 1 flüssiges Propylen pro kg PP, vorzugsweise von 1,9 1 flüssiges Propylen pro kg PP, eingestellt.

Erfindungsgemäß bevorzugt ist es, bei dem hier beschriebenen Verfahren unterschiedliche Phasenverhältnisse in den beiden Reaktoren einzustellen. Es wird ebenfalls, wie oben beschrieben Ethylen und Wasserstoff zudosiert.

Die Temperaturen und wasserstoffkonzentrationen in beiden Reaktoren können gleich oder verschieden sein. Geeignete Reaktoren sind Rührkessel-Reaktoren oder Schlaufenreaktoren.

Es ist möglich, das Monomere zwischen den beiden Reaktoren zu entspannen und das noch polymerisationsaktive Katalysator/Polymer-System in den zweiten Reaktor einzudosieren. Dabei kann in dem zweiten Reaktor auch eine niedrigere Wasserstoffkonzentration als im ersten Reaktor eingestellt werden.

Die erfindungsgemäßen Propylenpolymeren haben ein mittleres Molekulargewicht Mw (bestimmt mit der Methode der Gelpermeationschromatographie bei 135°C in 1,3,4-Trichlorbenzol als Lösungsmittel und einem PP-Standard) von 350.000 g/mol bis 1.000.000 g/mol, vorzugsweise von 350.000 g/mol bis 800.000 g/mol und insbesondere von 400.000 bis 650.000 g/mol.

Die Molekulargewichtsverteilung Mw/Mn (bestimmt mit der Methode der Gelpermeationschromatographie bei 135 °C in 1,3,4-Trichlorbenzol als Lösungsmittel und einem PP-Standard) der erfindungsgemäßen Propylenpolymeren liegt im Bereich von 4 bis 10, vorzugs-5 weise im Bereich von 4 bis 8.

Die isotaktische Sequenzlänge n-iso der erfindungsgemäßen Propylenpolymeren (bestimmt wie eingangs beschrieben) liegt im Bereich von 50 bis 100, vorzugsweise im Bereich von 55 bis 95 und insbesondere im Bereich von 60 bis 90.

Erfindungsgemäß bevorzugt sind Produkte mit einem MFR (230/5), bestimmt nach nach ISO 1133, von 0,01 bis 5 dg/min, besonders bevorzugt von 0,02 bis 2 dg/min.

Die erfindungsgemäßen Propylenpolymere der Zusammensetzung wie oben beschrieben zeichnen sich unter anderem dadurch aus, daß sie sich mit den üblichen Methoden der Polymerfraktionierung in mindestens zwei Fraktionen zerlegen lassen, welche unterschiedliche Viskositäten, sprich Molekulargewichte Mw haben.
Die hochmolekulare Fraktion des erfindungsgemäßen Propylenhomopolymers oder -copolymers, vorzugsweise Propylenhomopolymers, hat in der Regel eine Viskosität (=VZ) von 500 bis 1400 ml/g (bestimmt nach der in den Beispielen offenbarten Methode) und einem Anteil am Gesamtpolymeren von 20 bis 80 Gew.-%, vorzugsweise von 45 bis 75 Gew.-%, besonders bevorzugt von 48 Gew. bis 65 Gew. %.

Die niedermolekulare Fraktion des erfindungsgemäßen Propylenhomopolymers oder -copolymers, vorzugsweise Propylenhomopolymers, hat in der Regel eine Viskosität VZ von 200 bis 400 ml/g und einem Anteil am Gesamtpolymer von 20 bis 80 Gew.-%, vorzugsweise von 25 bis 55 Gew.-%, besonders bevorzugt von 35 bis 52 Gew. %.

Nach derzeitigem Kenntnisstand trägt dieses enge, mengenmäße Verteilungsspektrum der unterschiedlichen Fraktionen der erfindungsgemäßen Propylenpolymere in großem Ausmaß zu den verbesserten Eigenschaften (vor allem ZST), der aus den erfindungsgemäßen Propylenpolymeren herstellbaren Fasern, Folien und vor allem Formkörper (z.B. Rohre) bei.

Das nach der Polymerisationsreaktion erhaltene erfindungsgemäße Propylenpolymere wird üblicherweise mit Stabilisatoren, Gleitmitteln, Füllstoffen, Pigmenten etc. versetzt und granuliert.

Die Polymerisation des Propylens, gegebenefalls mit den beschrieben Comonomeren, findet , vorzugsweise in den beschriebenen Verfahren, in Gegenwart von Metallocen-Katalysatorsystemen statt.

Die Metallocen-Katalysatorsysteme enthalten üblicherweise eine Metallocenkomponente A), einen Co-Katalysator (auch Aktivator genannt) B) und gebenenfalls noch Trägersubstanzen C) und/oder metallorganische Verbindungen D) als sogenannte "Scavenger".

Als Metallocenkomponente A) des Metallocen- Katalysatorsystems kann grundsätzlich jedes Metallocen verwendet werden, das unter den genannten Polymerisationsbedingungen isotaktisches Polypropylen mit ausreichend hoher Molmasse, also ein Mw in der Regel höher als 350.000 g/mol und ausreichend hohem Schmelzpunkt, also in der Regel höher als 150 °C erzeugt.

Das Metallocen kann sowohl verbrückt als auch unverbrückt sein und gleiche oder verschiedene Liganden aufweisen. Bevorzugt sind Metallocene der Gruppe IVb des Periodensystems der Elemente, wie Titan, Zirkonium oder Hafnium.

Es können selbstverständlich auch Mischungen unterschielicher Metallocene als Komponente A) dienen.

Gut geeignete Metallocenkomponenten A) sind solche, die beispielsweise in DE-A 196 06 167 auf die hier ausdrücklich Bezug genommen wird, beschrieben sind, wobei besonders auf die Offenbarung auf Seite 3, Zeile 28 bis Seite 6, Zeile 48 der DE-A 196 06 167 hingewiesen wird.

Bevorzugte Metallocenkomponenten A) sind solche der nachstehenden Formel (I). 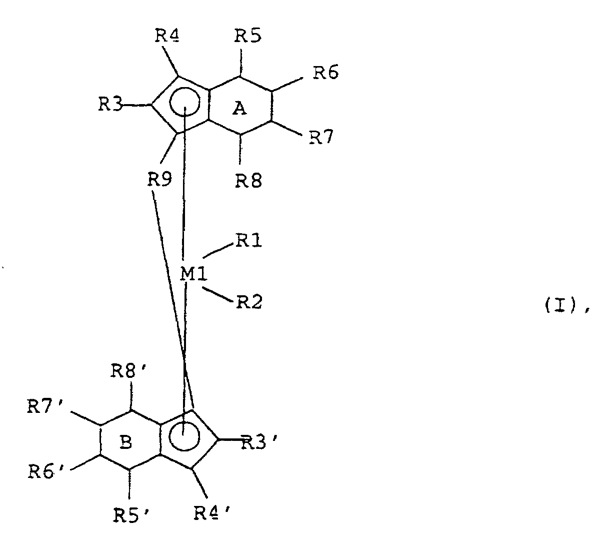 M¹ ein Metall der Gruppe IVb des Periodensystems der Elemente ist,
R¹ und R² gleich oder verschieden sind und ein Wasserstoffatom, eine C₁-C₁₀Alkylgruppe, eine C₁-C₁₀-Alkoxygruppe, eine C₆-C₂₀-Arylgruppe, eine C₆-C₁₀-Aryloxygruppe, eine C₂-C₁₀-Alkenylgruppe, eine OH-Gruppe, eine NR¹²₂-Gruppe, wobei R¹² eine C₁- bis C₂-Alkylgruppe oder C₆- bis C₁₄-Arylgruppe ist, oder ein Halogenatom bedeuten,
R³ bis R⁸ und R^{3'} bis R^{8'} gleich oder verschieden sind und ein Wasserstoffatom eine C₁-C₄₀-Kohlenwasserstoffgruppe, die linear, cyclisch oder verzweigt sein kann, z.B. eine C₁-C₁₀-Alkylgruppe, C₂-C₁₀-Alkenylgruppe, C₆-C₂₀-Arylgruppe, eine C₇-C₄₀-Arylalkylgruppe, eine C₇-C₄₀-Alkylarylgruppe oder eine C₈-C₄₀-Arylalkenylgruppe, bedeuten, oder benachbarte Reste R⁴ bis R⁸ und/oder R^{4'} bis R^{8'} mit den sie verbindenden Atomen ein Ringsystem bilden,
R⁹ eine Verbrückung bedeutet, bevorzugt 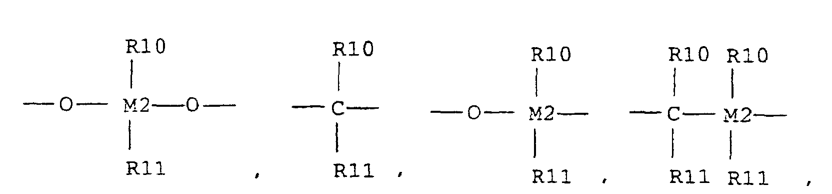 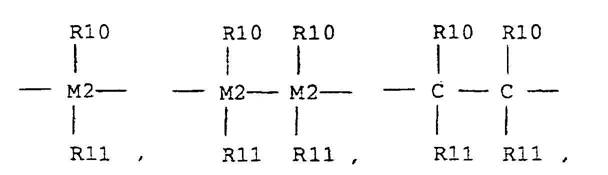 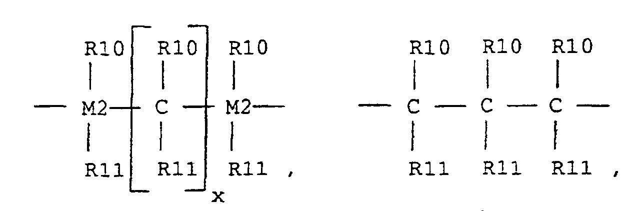 〉BR10, 〉AIR10,―Ge―, ―O―, ―S―, 〉SO, 〉SO2,
〉NR10, 〉CO, 〉PR10 oder 〉R(O)R10,
bedeutet,
R¹⁰ und R¹¹ gleich oder verschieden sind und ein Wasserstoffatom, ein Halogenatom oder eine C₁-C₄₀-kohlenstoffhaltige Gruppe ist wie eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Aralkyl-, eine C₇-C₄₀-Alkylaryloder eine C₈-C₁₀-Arylalkenylgrupge oder R¹⁰ und R¹¹ jeweils mit den sie verbindenden Atomen einen oder mehrere Ringe bilden und x eine ganze Zahl von Null bis 18 ist,
M² Silizium, Germanium oder Zinn ist, und die Ringe A und B gleich oder verschieden, gesättigt, ungesättigt oder teilweise gesättigt sind.

R⁹ kann auch zwei Einheiten der Formel I miteinander verknüpfen.

In Formel I gilt besonders bevorzuge, daß
M¹ Zirkonium oder Hafnium ist,
R¹ und R² gleich sind und für Methyl oder Chlor, insbesondere Chlor, stehen und R⁹ = M²R¹⁰R¹¹ ist, worin M² Silizium oder Germanium ist und R¹⁰ sowie R¹¹ eine C₁-C₂₀-Kohlenwasserstoffgruppe, wie C₁-C₁₀-Alkyl oder C₆-C₁₄-Aryl ist.

Die Indenyl- bzw. Tetrahydroindenylliganden der Metallocene der Formel I sind bevorzugt in 2-, 2,4-, 4,7-, 2,6-, 2,4,6-, 2,5,6-, 2,4,5,6- und 2,4,5,6,7-Stellung, insbesondere in 2,4-Stellung, substituiert. Bevorzugte Substituenten sind eine C₁-C₄-Alkylgruppe wie z.B. Methyl, Ethyl oder Isopropyl oder eine C₆-C₂₀-Arylgruppe wie Phenyl, Naphthyl oder Mesityl. Die 2-Stellung ist bevorzugt durch eine C₁-C₄-Alkylgruppe, wie z.B. Methyl oder Ethyl substituiert. Wenn in 2,4-Stellung substituiert ist, so gilt, daß
R⁵ und R^{5'} bevorzugt gleich oder verschieden sind und eine C₆-C₁₀-Arylgruppe, eine C₇-C₁₀-Arylalkylgruppe, eine C₇-C₄₀-Alkylarylgruppe oder eine C₈-C₄₀-Arylalkenylgruppe bedeuten.

Für den Substitutionsort gilt dabei die folgende Nomenklatur:

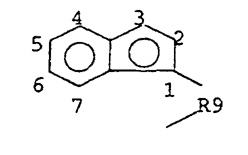

Von besonderer Bedeutung sind weiterhin Metallocene der Formel I, bei denen die Substituenten in 4- und 5-Stellung der Indenylreste (R⁵ und R⁶ sowie R^{5'} und R^{6'}) zusammen mit den sie verbindenden Atomen ein Ringsystem bilden, bevorzugt einen Sechsring. Dieses kondensierte Ringsystem kann ebenfalls durch Reste in der Bedeutung von R³-R⁸ substituiert sein. Beispielhaft für solche Verbindungen I ist Dimetylsilandiylbis(2-methyl-4,5-benzoindenyl)zirkoniumdichlorid zu nennen.

Insbesondere bevorzugt sind solche Verbindungen der Formel I, die in 4-Stellung eine C₆-C₂₀-Arylgruppe und in 2-Stellung eine C₁-C₄-Alkylgruppe tragen. Beispielhaft für solche Verbindungen er Formel I ist Dimethylsilandiylbis(2-methyl-4-phenylindenyl)zirkoniumdichlorid.

Beispiele für die Metallocenkomponente A des erfindungsgemäßen Verfahrens sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)indenyl)zirkoniumdichlorid
Dimethylsilandiylbis(2-methyl-4-phenyl-indenyl)zirkoniumdichlorid
Dimethylsilandiylbis(2-methyl-4-(p-tert.Butylphenyl)indenyl)-zirkoniumdichlorid
Dimethylsilandiylbis(2-methyl-4-t-butyl-indenylzirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-a-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiylbis(2-methyl-4, 5-benzo-indenyl)zirkoniumdichlorid
Dimethylsilandiylbis(2-methyl-4,6-diisopropyl-indenyl)zirkoniumdichlorid
Dimethylsilandiylbis(2-methyl-4,5-diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirchoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Dimethylsilandiylbis(2-methyl-4-phenanthrylinden)zirkoniumdichlorid
Dimethylsilandiylbis(2-ethyl-4-phenanthylindenyl)zirkoniumdichlorid
Methyl(phenyl)silandiylbis(2-methyl-4-phenyl-indenyl)zirkconiumdichlorid
Methyl(phenyl)silandiylbis(2-methyl-4,6-diisopropyl-indenyl)-zirkoniumdichlorid
Methyl(phenyl)silandiylbis(2-methyl-4-isopropyl-indenyl)zirkoniumdichlorid
Methyl(phenyl)silandiylbis(2-methyl-4, 5-benzo-indenyl)zirkoniumdichlorid
Methyl(phenyl)silandiylbis(2-methyl-4,5-(methylbenzo)-indenyl)-zirkoniumdichlorid
Methyl(phenyl)silandiylbis(2-methyl-4,5-(tetramethylbenzo)indenyl)zirkoniumdichlorid
Methyl(phenyl)silandiylbis(2-methyl-4-a-acenaphth-indenyl)-zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
Methyl(phenyl)silandiylbis(2-methyl-4-phenanthrylindenyl)-zirkoniumdichlorid
Methyl(phenyl)silandiylbis(2-ethyl-4-phenanthrylindenyl)-zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6-diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
Bis(butylcyclopentadienyl)Zr⁺CH₂CHCHCH₂B⁻(C₆F₅)₃
Bis(methylindenyl Zr⁺CH₂CHCHCH₂B⁻(C₆F₃)
Dimethylsilandiybis(2-methyl-4,5-benzo-indenyl)-Zr⁺CH₂CHCHCH₂B⁻(C₆F₅)₃
1,2-Ethandiylbis(2-methyl-indenyl)-Zr⁺CH₂CHCHCH₂B⁻(C₆F₅)₃
1,4-Butandiylbis(2-methyl-indenyl)-Zr⁺CH₂CHCHCH₂B⁻(C₆F₅)₃
Dimethylsilandiylbis(2-methyl-4,6-diisopropyl-indenyl)-Zr⁺CH₂CHCHCH₂B⁻(C₆F₅)₃
Dimethylsilandiylbis(2-ethyl-4-phenyl-indenyl)-Zr⁺CH₂CHCHCH₂B⁻(C₆F₅)₃
Dimethylsilandiylbis(2-methyl-4-phenyl-indenyl)- Zr⁺CH₂CHCHCH₂B⁻(C₆F₅)₃
Methyl(phenyl)silandiylbis(2-methyl-4-phenyl-indenyl)-Zr⁺CH₂CHCHCH₂B⁻(C₆F₅)₃
Dimethylsilandiylbis(2-methyl-4-phenyl-indenyl)-Zr⁺CH₂CHCHCH₂B⁻(C₆F₅)₃
Dimethylsilandiylbis(indenyl)-Z⁺CH₂CHCHCH₂B⁻(C₆F₅)₃
Dimethylsilandiyl(tert.-Butylamino)(tetramethylcyclopentadienyl)zirkoniumdichlorid
[Tris(pentafluorophenyl)(cyclopentadienyliden)borato)(cyclopentadienyl)-1,2,3,4-tetraphenylbuta-1,3-dienylzirkonium
Dimethylsilandiyl-[tris(pentafluorophenyl)(2-methyl-4-phenylindenyliden)borato](2-methyl-4-phenylindenyl)-1,2,3,4-tetraphenylbuta-1,3-dienylzirkonium
Dimethylsilandiyl-[tris(trifluoromethyl)(2-methylbenzindenyliden)borato](2-methylbenzindenyl)-1,2,3,4-tetraphenylbuta-1,3-dienylzirkonium
Dimethylsilandiyl- [tris(pentafluorophethyl)(2-methyl-indenyliden)borato](2-methyl-indenyl)-1,2,3,4-tetraphenylbuta-1,3-dienylzirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-a-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiylbis(2-methyl-4, 5-benzo-indenyl)zirkoniumdimethyl
Dimethylsilandiylbis(2-methyl-4, 6-diisopropyl-indenyl)zirkoniumdimethyl
Dimethylsilandiylbis(2-methyl-4,5-diisopropyl-indertyl-)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkon-iumdi-5 methyl
Dimethylsilandiylbis(2-methyl-5-t-butyl-indenyl)zirkoniumdimethyl
Dimethylsilandiylbis(2-methyl-4-phenanthrylindenyl)zirkoniumdimethyl
Dimethylsilandiylbis(2-ethyl-4-phenanthrylindenyl)zirkoniumdimethyl
Methyl(phenyl)silandiylbis(2-methyl-4-phenyl-indenyl)zirkoniumdimethyl
Methyl(phenyl)silandiylbis(2-methyl-4, 6-diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4, 5-benzo-indenyl)zirkoniumdimethyl
Methyl(phenyl)silandiylbis(2-methyl-4,5-(methylbenzo)-indenyl)zirkoniumdimethyl
Methyl(phenyl)silandiylbis(2-methyl-4,5-(tetramethylbenzo)-indenyl)zirkoniumdimethyl
Methyl(phenyl)silandiylbis(2-methyl-4-a-acenaphthindenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
Methyl(phenyl)silandiylbis(2-methyl-4-phenanthrylindenyl)zirkoniumdimethyl
Methyl(phenyl)silandiylbis(2-ethyl-4-phenanthrylindenyl)zirkoniumdimethyl
1,2-Ethandiylbis(2-methyl-4-phenyl-indenyl)zirkoniumdimethyl
1,2-Butandiylbis(2-methyl-4-phenyl-indenyl)zirkoniumdimethyl
1,2-Ethandiylbis(2-methyl-4,6-diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,4-Butandiylbis(2-methyl-indenyl)zirkoniumdimethyl

Besonders bevorzugt sind:
Dimethylsilandbis(2-methyl-indenyl)zirkoniumdichlorid
Dimethylsilandiylbis(2-methyl-4-(1-naphthyl)-indenyl)zirkoniumdichlorid
Dirne thylsilandiylbis(2-methyl-4-phenyl-indenyl)zirkoniumdichlorid
Dimethylsilandiylbis(2-methyl-4-(p-tert-Butylphenyl)-indenyl)zirconiumdichlorid
Dimethylsilandiylbis(2-methyl-4-a-acenaphth-indenyl)zirkoniumdichlorid
Dimethylsilandiylbis(2-ethyl-4-phenyl-indenyl)zirkoniumdichlorid
Dimethylsilandiylbis(2-methyl-4,5-benzo-indenyl)zirkoniumdichlorid
Dimethylsilandiylbis(2-methyl-4,6-diisopropyl-indenyl)zirkoniumdichlorid
Dimethylsilandiylbis(2-methyl-4-phenanthryl-indenyl)zirkoniumdichlorid
Dimethylsilandiylbis(2-ethyl-4-phenanthryl-indenyl)zirkoniumdichlorid
Methyl(phenyl)silandiylbis(2-methyl-4-phenanthryl-indenyl)-zirkoniumdichlorid
Methyl(phenyl)silandiylbis(2-ethyl-4-phenanthryl-inder-yl)-zirkoniumdichlorid

Herstellungsverfahren für Metallocene der Formel I sind z.B. in Journal of Organometallic Chem. 288 (1985) 63-67 und den dort zitierten Dokumenten beschrieben.

Als Cokatalysator-Komponente 3) enthält das erfindungsgemäße Katalysatorsystem üblicherweise offenkettige oder cyclische Alumoxanverbindungen und/oder andere metalloceniumionenbildende Verbindungen B). Diese können Lewissäuren und/oder ionische Verbindungen mit nicht-koordinierten Anionen sein.

Die Aluminoxanverbindungen werden üblicherweise durch die allgemeinen Formel II oder III beschrieben 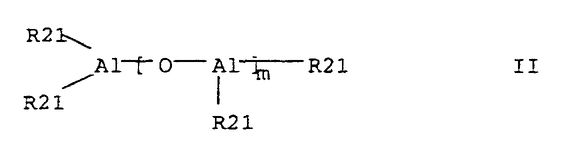 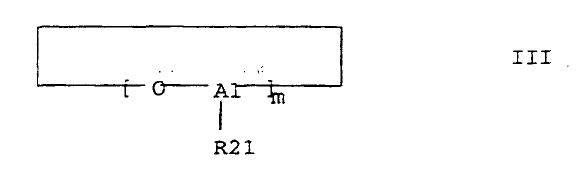 wobei
- R²¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und in US 4,794,096 beschrieben.

In der Regel liegen die dabei erhaltenen oligomeren Alumoxanverbindungen als Gemische unterschiedlich langer, sowohl linearer als auch cyclischer Kettersnoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als Komponente B) Aryloxyalumoxane, wie in der US 5,391,793 beschrieben, Aminoaluminoxane, wie in der US 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5-Trifluorophenyl und 3,5-Di(trifluoromethyl)phenyl.

Besonders bevorzugt sind bororganische Verbindungen.

Beispiele für Lewis-Säuren sind Trifluorboran, Triphenylboran, Tris(4-fluorophenyl)boran, Tris(3,5-difluorophenyl)boran, Tris(4-fluoromethylphenyl)boran, Tis(pentafluorophenyl)boran, Tris(tolyl)boran, Tris(3,5-dimethylphenyl)boran, Tris(3,5-dimethylfluorophenyl)boran und/oder Tris(3,4,5-trifluorophenyl)boran. Insbesondere bevorzugt ist Tris(pentafluorophenyl)boran

Gut geeignete ionische Verbindungen, die ein nicht koordinierendes Anion enthalten, sind beispielsweise Tetrakis(pentafluorophenyl)borate, Tetraphenylborate, SbF₆-, CF₃SO₃⁻ oder CIO₄⁻. Als kationisches Gegenion werden im allgemeinen Lewis-Basen wie z.B. Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimehylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen mit nicht-koordinierenden Anionen sind
Triethylammoniumtetra(phenyl)bora,
Tributylammoziumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniurtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)aminoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

Bevorzugt sind Triphenylcarbeniumtetrakis(pentafluorophenyl)borat und/oder N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran (13),
Undecahydrid-7, 8-dimethyl-7, 8-dicarbaundecaboran,
Dodecahydrid-1-phenyl-1,3-dicarbaundecaboran,
Tri(butyl)ammoniumdecahydrid-8-ethyl-7,9-dicarbaundecaborat,
4-Carbanonaboran (14) Bis(tri(butyl))ammonium)nonaborat,
Bis(tri(butyl)ammonium)undecaborat,
Bis(tri(butyl)ammonium)dodecaborat,
Bis(tri(butyl)ammonium)decachlorocecaborat,
Tri(butyl)ammonium-1-carbadecaborate,
Tri(butyl)ammonium-1-carbadodecaborate,
Tri(butyl)ammonium-1-trimethylsilyl-l-carbadecaborate,
Tri(butyl)ammoniumbis(nonahydrid-1,3-dicarbonnaborat)cobaltat (III),
Tri(butyl)ammoniumbis(undecahydrid-7,8-dicarbaundecaborat)ferrat (III),
von Bedeutung.

Die Trägerkomponente C) des erfindungsgemäßen Katalysatorsystems kann ein beliebiger, organischer oder anorganischer, inercer Feststoff sein, insbesondere ein poröser Träger wie Talk, anorganische Oxide und feinteilige Polymerpulver (z.B. Polyolefine).

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxidischen Trägern eingesetzt werden können, sind z.B. MgO, ZrO_{2'} TiO₂ oder B₂O₃, um nur einige zu nennen.

Organische Trägermaterialien sind beispielsweise feinteilige Polyolefinpulver (z.B. Polyethylen, Polypropylen oder Polystyrol).

Die verwendeten Trägermaterialien, insbesondere die anorganischen Oxide, weisen im allgemeinen eine spezifische Oberfläche im Bereich von 10 bis 1000 m²/g, ein Porenvolumen im Bereich von 0,1 bis 5 ml/g und eine mittlere Partikelgröße von 1 bis 500 mm auf. Bevorzugt sind Träger mit einer spezifischen Oberfläche im Bereich von 50 bis 500 m²/g, einem Porenvolumen im Bereich zwischen 0,5 und 3,5 ml/g und einer mittleren Partikeigröße im Bereich von 5 bis 350 mm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 mm.

Die Herstellung des Trägerkatalysators ist im allgemeinen nicht kritisch. Gut geeignete Varianten sind die folgenden:
Bei Variante 1 wird im allgemeinen mindestens eine Metallocenkomponente A) üblicherweise in einem organischen Lösungsmittel mit der Cokatalysator-Komponente B) in Kontakt gebracht, um ein gelöstes oder teilsuspendiertes Produkt zu erhalten. Dieses Produkt wird dann in der Regel zum, gegebenenfalls wie vorher beschrieben, vorbehandelten Trägermaterial, vorzugsweise poröses Siliciumdioxid (Silicagel) gegeben, das Lösemittel entfernt und den Trägerkatalysator als frei fließender Feststoff erhalten. Der Trägerkatalysator kann dann noch zum Beispiel mit C₂- bis
C₁₀-Alk-1-enen vorpolymerisiert werden.

Nach Variante 2 erhält man den Metallocen-Trägerkatalysator im allgemeinen durch folgende Verfahrensschritte
a) Umsetzung eines anorganischen Trägermaterials, vorzugsweise poröses Siliciumdioxid wie vorher beschrieben, mit einem Inertisierungsmittel, wie vorher beschrieben, vorzugsweise einem Aluminiumtri-C₁-C₁₀-alkyl, wie Trimethylaluminium, Triethylaluminium, Triisobutylaluminium,
b) Umsetzung des so erhaltenen Materials mit einem Metallocenkomplex A) - vorzugsweise einem der Formel I - in feiner Metalldihalogenid-Form und einer metalloceniumionenbildenden Verbindung B) und anschließende
c) Umsetzung mit einer Alkali-, Erdalkali- oder Hauptgruppe-IIIorganometallverbindung, vorzugsweise Aluminiumtri-C₁-C₁₀-alkyl, wie Trimethylaluminium, Triethylaluminium oder Triisobutylaluminium.

Dieses Verfahren ist in DE-A 19 606 197, auf die hiermit ausdrücklich Bezug genommen wird, ausführlich beschrieben.

Als Additiv kann während oder nach der Herstellung des geträgerten Katalysatorsystems eine geringe Menge eines Olefins bevorzugt eines 1-Olefins, wie 1-Hexen oder Styrol als aktivitätssteigernde Komponente oder eines Antistatikums zugesetzt werden. Das molare Verhältnis von Additiv zu Metallocenkomponente Verbindung I beträgt dabei bevorzugt zwischen 1 : 1000 bis 1000 : 1, ganz besonders bevorzugt 1 : = 20 bis 20 : 1.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist in WO 94/28034 beschrieben.

Die erfindungsgemäßen Polymere lassen sich zu Fasern, Folien und Formkörpern vorteilhaft erarbeiten.

Die Formkörper, insbesondere die Rohre, können im chemischen Apparatebau, als Trinkwasser-Rohre oder Abwasser-Rohre vorteilhaft verwendet werden.

Weiterhin lassen sich die Formkörper aus den erfindungsgemäßen Propylenpolymerisaten zur Herstellung von Halbzeugen (Beispiele sind Stäbe, Platten, Fittinge, Profile z.B. via Spritzgieß-Verfahren) oder blasgeformten Behältern oder Luftführungsteile im Kraftfahrzeugsbereich verwenden.

### Beispiele:

Die folgenden Beispiele sollen die Erfindung erläutern. Zur Charakterisierung der hergestellten Produkte wurden folgende polymeranalytischen Methoden verwendet:

| | |
|---|---|
| Schmelzindex MFR (230/5) | nach ISO 1133 |
| Viskositätszahl [ml/g] | bestimmt bei 135 °C in Dekalin |
| Zeitstand (ZST) | nach ISO 1167 |
| Schlagzähigkeit am Rohr | nach DIN 8078 |

nᵢₛₒ = mittlere Länge der isotaktischen Sequenzen; bestimmt durch 13C-NMR Spektroskopie (siehe Zambelli et al. Macormolecules 8, 687-689 (1975) )

### Xylollöslicher Anteil (in Gew.-%)

Eine Polymerprobe wurde im siedenden Xylol vollständig gelöst und die Mischung auf 20°C abkühlen gelassen. Unlösliches wurde abfiltriert, bis zur Gewichtskonstanz getrocknet und gewogen. Das prozentuale Verhältnis gewogene Polymermenge zur eingesetzten Polymermenge wurde berechnet.

### Beispiel A:

### Darstellung eines geträgerten Katalysatorsystems (Katalysator 1)

2,22 g (3.55 mmol) rac-Dimethylsilandiylbis(2-methyl-4-phenylindenyl)zirkoniumdichlorid wurden bei Raumtemperatur in 177,5 ml (640 mmol A1) 30 %iger toluolischer Methylaluminoxan-Lösung gelöst. Zur Voraktivierung wurde der Ansatz lichtgeschützt bei 25 °C 18 h stehengelassen. Die so bereitete Metallocen-MAO-Lösung wurde anschließend mit 434,5 ml Toluol auf ein Gesamtvolumen von 612 ml verdünnt. In diese Lösung wurden 153 g SiO₂¹) langsam eingetragen. Das Verhältnis Volumen der Lösung zum Gesamtporenvolumen des Trägermaterials betrug 2.5. Nach beendeter Zugabe wurde der Ansatz 5 min bei Raumtemperatur gerührt. Anschließend wurde der Ansatz innerhalb von 2 h bei 40 °C unter Vakuum bis zur Trockne eingeengt und der Rückstand 5 h bei 25 °C und 10⁻³ mbar getrocknet. Es wurden 201 g eines frei fließenden, rosafarbenen Pulvers erhalten, das laut Elementaranalyse 0.14 Gew% Zr und 8.1 Gew% Al enthielt.
1) Silica Typ MS 948, W.R. Grace, Davison Chemical Devision, Baltimore, Maryland, USA, Porenvolumen 1,6 ml/g, calciniert bei 800 °C.

### Beispiel 1:

In einem 70 ltr. Kessel wurden nach sorgfältiger Inertisierung 10 ltr. flüssiges Propylen bei 30 °C vorgelegt. Es wurden 10 mmol Triisobutylaluminium zugegeben und bei einer Temperatur von 30°C 15 Minuten gerührt. Anschließend wurden 5250 mg des Katalysators 1 zugegeben und in einem weiteren Schritt wurden 2.21 N1 H2 zugegeben.

Der Kesselinhalt wurde auf 70 °C unter Rühren aufgeheizt. Die Polymerisation startete. Die Temperatur wurde eine Stunde bei 70 °C konstant gehalten. Der Reaktorinhalt wurde durch Entspannen aufgearbeitet.

Es wurden 7.5 kg PP erhalten. Daraus berechnet sich eine Katalysatorausbeute von 1.4 kgPP/g Kat. Es wurde ein MFR (230/5) 0.34 dg/min bestimmt. Der xylollösliche Anteil wurde zu 0.3 Gew. % bestimmt. Der acetonlösliche Anteil wurde zu 0.05 Gew. % bestimmt.

### Vergleichsbeispiel 1:

Es wurde verfahren wie in Beispiel 1. Es wurden jedoch 3.4 N1 H2 zugegeben. Es wurden 5250 mg des Katalysators 1 verwendet. Es wurden 8.5 kg PP erhalten. Daraus berechnete sich eine Katalysatorausbeute von 1.6 kgPP/g Kat. An einer Probe wurde ein MFR (230/5) 0.9 dg/min bestimmt.

### Beispiel 2:

In einem weiteren Versuch wurde wie in Beispiel 1 vorgegangen, jedoch wurde eine Polymerisationstemperatur von 50 °C gewählt.

Anschließend wurden 7670 mg des Katalysators 1 zugegeben. Es wurde kein Wasserstoff zugegeben.

Es wurden 2.4 kg PP erhalten. Daraus berechnete sich eine Katalysatorausbeute von 0.3 kgPP/g Kat. An einer Probe wurde ein MFR (230/5) 0.16 dg/min bestimmt. Die Viskositätszahl betrug 696 ml/g.

### Beispiel 3:

In einem weiteren Versuch wurde wie in Beispiel 2 vorgegangen.

Es wurden 7670 mg des Katalysators 1 und 23.1 N1 H2 eingesetzt. Die Dosierfolge wurde wie im Beispiel 1 ausgeführt.

Es wurden 5.3 kg.PP erhalten. Daraus berechnete sich eine Katalysatorausbeute von 0.7 kgPP/g Kat. An einer Probe wurde ein MFR (230/5) 35.3 dg/min bestimmt. Die Viskositätszahl betrug 202 ml/g.

### Beispiel 4:

In einem weiteren Versuch wurde wie in Beispiel 2 vorgegangen.

Es wurden 8400 mg des Katalysators 1 zugegeben. Zunächst wurde kein Wasserstoff zugegeben.

Die Polymerisationszeit wurde auf 90 Minuten verlängert. Nach 90 Minuten wurden 23.1 N1 H2 zugegeben. Die Polymerisation wurde für weitere 18 Minuten bei gleicher Temperatur fortgesetzt.

Es wurden 12 kg PP erhalten. Daraus berechnete sich eine Katalysatorausbeute von 1.7 kgPP/g Kat. An einer Probe wurde ein MFR (230/5) 0.86 dg/min bestimmt. Die Viskositätszahl betrug 468 ml/g.

Der Schmelzpunkt betrug 152.1 °C; die Schmelzwärme betrug 96.3 J/g.

Der xylollösliche Anteil wurde zu 0.3 Gew. % bestimmt.

Der acetonlösliche Anteil wurde zu 0.05 Gew. % bestimmt.

NMR spektroskopisch wurde die Triaden-Verteilung (mm; mr; rr) bestimmt :

Aus diesen Daten berechnete man die isotaktische Sequenzlänge niso = 76.

### Beispiel 5:

In einem weiteren Versuch wurde wie in Beispiel 4 vorgegangen.

Es wurden 3910 mg des Katalysators 1 zugegeben. Zunächst wurde kein wasserstoff zugegeben.

Die Polymerisationszeit wurde auf 120 Minuten verlängert. Nach 120 Minuten wurden 29.9 N1 H2 zugegeben. Die Polymerisation wurde für weitere 30 Minuten bei gleicher Temperatur fortgesetzt.

Es wurden 12.9 kg PP erhalten. Daraus berechnete sich eine Katalysatorausbeute von 3.3 kgPP/g Kat. An einer Probe wurde ein MFR (230/5) 1.9 dg/min bestimmt. Die Viskositätszahl betrug 417 ml/g.

Der xylollösliche Anteil wurde zu 0.2 Gew. % bestimmt.

Der acetonlösliche Anteil wurde zu 0.05 Gew. % bestimmt.

Der Schmelzpunkt betrug 149.9 °C ; die Schmelzwärme betrug 96.6 J/g.

### Beispiel 6:

In einem weiteren Versuch wurde wie in Beispiel 5 vorgegangen.

Es wurden 2890 mg des Katalysators 1 zugegeben. Zunächst wurden 3.4 N1 Wasserstoff zugegeben.

Die Polymerisationszeit wurde auf 60 Minuten eingestellt. Nach 60 Minuten wurden 26 N1 H2 zugegeben. Die Polymerisation wurde für weitere 48 Minuten bei gleicher Temperatur fortgesetzt.

Es wurden 11.9 kg PP erhalten. Daraus berechnete sich eine Katalysatorausbeute von 4.1 kgPP/g Kat. An einer Probe wurde ein MFR (230/5) 3.9 dg/min bestimmt.

### Beispiel 7:

Es wurden 50 ltr flüssiges Propylen bei 30 °C vorgelegt.. Zur Voraktivierung wurden 10 mmol Triisobutylaluminium zugegeben und bei 30 °C 15 Minuten gerührt. Anschließend wurden 5878 mg des Katalysators 1 zugegeben und in einem weiteren Schritt wurden 0.2 N1 H2 zugegeben.

Der Reaktorinhalt wurde auf 70 °C erwärmt, die Polymerisation startete. Nach 10 Minuten wurde der Reaktorinhalt vorsichtig auf einen Druck von 25 bar entspannt. Es wurden anschließend 3 N1 Wasserstoff zugegeben. Man polymerisierte 1 Stunde in der Gasphase unter Rühren weiter. Der Druck wurde durch Zugabe von Propylen konstant bei 25 bar gehalten.

Nach einer Stunde wurden 30 Nl Wasserstoff zugefahren, der Druck stieg an auf 27 bar.

Man polymerisierte 1 Stunde in der Gasphase unter Rühren weiter.

Der Druck wurde durch Zugabe von Propylen konstant bei 27 bar gehalten.

Es wurden 12.4 kg PP erhalten. Daraus berechnete sich eine Katalysatorausbeute von 3.4 kgPP/g Kat. An einer Probe wurde ein MFR (230/5) 3.9 dg/min bestimmt.

### Beispiel 8:

Es wurden 50 ltr flüssiges Propylen bei 30 °C vorgelegt. Zur Voraktivierung wurden 10 mmol Triisobutylaluminium zugegeben und bei 30 °C 15 Minuten gerührt.

Anschließend wurden 5878 mg des Katalysators 1 zugegeben und in einem weiteren Schritt wurden 2.2 N1 H2 zugegeben.

Der Reaktorinhalt wurde auf 70 °C erwärmt, die Polymerisation startete. Man polymerisierte 1 Stunde unter Rühren weiter. Die Temperatur wurde durch Mantelkühlung konstant gehalten.

Nach einer Stunde wurde der Reaktorinhalt vorsichtig auf einen Druck von 25 bar entspannt; es wurden 30.5 N1 Wasserstoff zugefahren, der Druck stieg an auf 27 bar.

Man polymerisierte 1 Stunde in der Gasphase unter Rühren weiter.

Der Druck wurde durch Zugabe von kg Propylen konstant bei 27 bar gehalten.

Es wurden 10.4 kg PP erhalten. Daraus berechnete sich eine Katalysatorausbeute von 2.8 kgPP/g Kat. An einer Probe wurde ein MFR (230/5) 2.8 dg/min bestimmt.

### Beispiel 9

Es wurde in zwei hintereinandergeschalteten Rührkesseln von je 16 1 Inhalt kontinuierlich polymerisiert. Beide Reaktoren wären mit 10 1 flüssigem Propylen beschickt. Als Cokatalysator wurde Triisobutylaluminium in einer Konzentration von 1 mmol/l verwendet. Die Wasserstoffkonzentration in der flüssigen Phase wurde auf 50 Vol. ppm eingestellt.

Im ersten Reaktor wurde ein Gemisch aus Propylen bei 50 °C in Gegenwart des o.g. Katalysator 1 polymerisiert. Katalysator, Cokatalysator, Propylen und Wasserstoff wurden kontinuierlich nach dosiert. Es wurde ein Feststoffanteil von 224 g P? pro Liter Suspension gefahren. Daraus berechnete sich ein Phasenverhältnis von 3,3 1 flüssiges Propylen pro kg PP. Wasserstoff wurde so nachdosiert, daß sich in der flüssigen Phase eine Konzentration von 50 Vol. ppm einstellt.

Das im ersten Reaktor erhaltene PP wurde zusammen mit dem Katalysator in den zweiten Reaktor überführt. Im zweiten Reaktor wurde Wasserstoff und Propylen nachdosiert. Die H₂-Konzentration in der flüssigen Phase betrug 410 Vol. ppm. Die Reaktionstemperatur im zweiten Reaktor betrug ebenfalls 50 °C. Es wurde ein Feststoffanteil von 324 g PP pro Liter Suspension gefahren. Daraus berechnete sich ein Phasenverhältnis von 1,9 1 flüssiges Propylen pro kg PP.

Das Reaktionsprodukt wurde aus dem Reaktor 2 kontinuierlich in einen Flash Behälter überführt, der bei einer Temperatur von 70 °C und einem Druck von 0.4 bar betrieben wurde. Aus dem Flash Behälter wurde das Polymerisat taktweise entnommen.

Es ergab sich eine Katalysatorausbeute von 5 kg PP/g Katalysator. Es wurde eine Molmassenverteilung M_{w/}Mₙ von 6,0 gemessen, ein MFR-Wert von 1.2 dg/min, eine Viskositätszahl von 550 ml/g. Der xylollösliche Anteil wurde mit 0.5 Gew.-% gemessen.

### Beispiel 10

In einer Polymerisations-Anlage wurde Propylen zu PP polymerisiert. Der Katalysator (1), und Triisobutylaluminium wurden miteinander vermischt und im Vorpolymerisationsreaktor kontinuierlich in flüssigen Propylen vorpolymerisiert. Das Gemisch aus Katalysator, Triisobutylaluminium, Propylen und Polypropylen wurde in den ersten Reaktor eindosiert. Zusätzlich wurde Propylen über ein Vorratsgefäß dem ersten Reaktor zugeführt. Im flüssigen Propylen wurde Wasserstoff gelöst und über diesen Strom dann in den Reaktor eindosiert. Im flüssigen Propylen wurde eine Konzentration von 60 ppm Wasserstoff eingestellt. In den ersten Reaktor wurden 17 t/h Propylen eingefahren. Im Reaktor wurde Propylen in Anwesenheit des Katalysators 1 zu PP umgesetzt. Dem ersten Reaktor wurde kontinuierlich das Reaktionsgemisch entnommen und in den zweiten Reaktor eindosiert. In den zweiten Reaktor wird 7 t/h Propylen nachdosiert. In diesem Propylen Strom wurde eine Konzentration von 420 ppm Wasserstoff eingestellt. Nach Durchlaufen des zweiten Reaktors wurde das Reaktionsgemisch in einem Rührkessel durch Entspannen auf 18 bar aufgearbeitet und das PP und die gasförmigen Komponenten voneinander separiert. Das gasförmige Propylen wurde kondensiert, destilliert und anschließend in das Vorratsgefäß zurückgefahren. Pro Liter flüssiges Propylen, das in den ersten Reaktor eindosiert wurde, wurden 0,9 mmol Al-Alkyl und 80 mg Katalysator eindosiert.

In ersten Reaktor wurde ein Phasenverhältnis von 3,3 1 flüssiges Propylen pro kg PP eingestellt; im zweiten Reaktor wurde ein Phasenverhältnis von 1,9 1 flüssiges Propylen pro kg PP eingestellt. Die aus den Reaktoren abgeführten Wärmemengen verhielten sich wie 1,4 : 1 (1. Reaktor/2. Reaktor). Das erhaltene PP Produkt wies eine Polydispersität M_{w}/Mₙ von 7,0 und einen MFR (230/5) Wert von 0.9 dg/min auf.

### Beispiel 11

Das aus Beispiel 4 erhaltene Pulver wurde unter Inertgas in einem Zweischneckenextruder mit 53 mm Schneckendurchmesser bei ca 240 °C granuliert. Dabei wurden als Stabilisatoren 0,15 % ®Irganox 1010 und 0,15 % ®Hostanox PAR 24 hinzugefügt. Außerdem wurde eine Farbmischung zugesetzt. Das erhaltene Granulat wurde einer M_{w}/Mₙ-Bestimmung unterzogen. M_{w}/Mₙ betrug 6,0.

### Vergleichsbeispiel 2

Das aus dem Vergleichsbeispiel 1 erhaltene Pulver wurde unter Inertgas in einem Zweischneckenextruder mit 53 mm Schneckendurchmesser bei ca. 240 °C granuliert. Dabei wurden als Stabilisatoren 0,15 % ®Irganox 1010 und 0,15 % ®Hostanox PAR 24 hinzugefügt. Außerdem wurde eine Farbmischung zugesetzt. Das erhaltene Granulat wurde einer M_{w}/Mₙ-Bestimmung unterzogen. M_{w}/Mₙ betrug 3.8.

Das so erhaltene Granulat wurde auf einer Rohrextrusionsanlage mit einem 60 mm Nutbuchsenextruder und einem Vakuum-Sprühtank zu Rohren der Dimension 32x4,5 mm (Innendurchmesser = 32 mm, Wandstärke = 4,5 mm) verarbeitet. Der Massedurchsatz betrug 150 kg/h. Die Massetemperatur wurde auf 210 °C eingestellt. Die Rohroberfläche war sehr rauh.

### Beispiel 12

Das aus Beispiel 4 erhaltene Pulver wurde unter Inertgas in einem Zweischneckenextruder mit 53 mm Schneckendurchmesser bei ca. 240 °C granuliert. Dabei wurden als Stabilisatoren 0,2 % ®Irganox 1010 und 0,2 % ®Hostanox PAR 24 hinzugefügt. Das erhaltene Granulat wurde einer M_{w}/Mₙ-Bestimmung unterzogen. M_{w}/Mₙ betrug 6.0. Der Schmelzindex MFR 230/2,16 (nach ISO 1133) betrug = 0.25 dg/min.

### Beispiel 13

Auf einer Spritzgießmaschine wurden aus Granulat von Beispiel 12 Zugstäbe (Probekörper Typ 1A nach ISO 527, Teil 1) zur Bestimmung von physikalischen Eigenschaftswerten hergestellt.

Desweiteren wurde aus dem Granulat aus Beispiel 12 auf einer Rohrextrusionsanlage mit einem 60 mm Nutbuchsenextruder und einem Vakuum-Sprühtank Rohre der Dimension 32 x 3 mm (Innendurchmesser = 32 mm, Wandstärke = 3 mm) hergestellt. Der Massedurchsatz betrug 150 kg/h. Die Massetemperatur wurde auf 210 °C eingestellt. Folgende Materialeigenschaften wurden bestimmt:

| | |
|---|---|
| Zugversuch | nach ISO 527 Teil 1 und 2 |
| Schlagzähigkeit nach Charpy | nach ISO 179 / 1eU |
| Kerbschlagzähigkeit | nach ISO 179 / 1eA |
| DSC | nach interner Targor Methode |
| Zeitstand-Innendruckversuch | nach ISO 1167, Anforderungen nach DIN 8078 |
| Schlagzähigkeit am Rohr | nach DIN 8078 |

Die Ergebnisse aus dem Zugversuch, den Zähigkeitsprüfungen und der DSC-Bestimmung wurden mit Werten verglichen, die an einem Granulat mit enger Molmassenverteilung ermittelt wurden. Die Herstellbedingungen der Probekörper entsprachen in beiden Fällen den Anforderungen der ISO DIS 1873, Teil 2.

Es wurde festgestellt, daß die physikalischen Eigenschaftswerte von Beispiel 13 im Vergleich zu Vergleichsbeispiel 2 M_{w}/Mₙ= 3.8 hinsichtlich der Steifigkeit auf einem höheren Niveau bei gleicher Zähigkeit lagen. Der Kristallitschmelzpunkt lag um 10 bis 15 °C niedriger als bei herkömmlichen PP Arten, was deutliche Vorteile in der Verarbeitung (geringere Energieaufnahme der Maschinen) brachte.

### Rohr:

Es wurde festgestellt, daß die Verarbeitung sehr gleichmäßig verlief und die Rohroberfläche sowohl innen als auch außen sehr glatt waren. Die Qualität der Rohroberfläche wurde charakterisiert, indem sie mit Rohren verglichen wurde, die aus einem Granulat mit enger Molmassenverteilung (s. Vergleichsbeispiel 2 M_{w}/Mₙ= 3.8) auf der gleichen Rohrextrusionsanlage unter gleichen Bedingungen gefertigt wurden.

Die Schlagzähigkeit der Rohre war gut und entsprach den Anforderungen nach DIN 8078 Abschnitt 3.5. Die Rohre wurden verschiedenen Zeitstand-Innendruckprüfunger entsprechend den Anforderungen der DIN 8078 unterzogen:

| Prüftemperatur | Prüfspannung | Mindeststandzeit (Soll) | erreichte Standzeit |
|---|---|---|---|
| 95 | 3,5 N/mm² | 1000 h | = 11155 h Prüfung abgeschlossen |

Die in DIN 8078 (Rohre aus PP) vorgeschriebenen Mindeststandszeiten für PP-H wurden deutlich überschritten. Die Rohre besitzen ein sehr gutes Zeitstandsverhalten und eine glatte Oberfläche. Die Anforderung an die Schlagzähigkeit am Rohr nach DIN 8078 für PP-H wurde erfüllt.

### Beispiel 14

Das aus Beispiel 5 erhaltene Pulver wurde unter Inertgas in einem Zweischneckenextruder mit 53 mm Schneckendurchmesser bei ca. 240 °C granuliert. Dabei wurden als Stabilisatoren 0,2 % ®Irganox 1010 und 0,2 % ®Hostanox PAR 24 hinzugefügt. Das erhaltene Granulat wurde einer M_{w/}Mₙ-Bestimmung unterzogen. M_{w/}Mₙ 5.9. Der Schmelzindex MFR 230/2,16 (nach ISO 1133) betrug 0.49 g/10min.

### Beispiel 15

Auf einer Spritzgießmaschine wurden aus Granulat nach Beispiel 14 Zugstäbe (Probekörper Typ 1A) zur Bestimmung von physikalischen Eigenschaftswerten hergestellt.

Desweiteren wurde das Granulat aus Beispiel 14 auf einer Rohrextrusionsanlage mit einem 60 mm Nutbuchsenextruder und einem Vakuum-Sprühtank zu Rohren der Dimension 32 x 3 mm (Innendurchmesser = 32 mm, Wandstärke = 3 mm) verarbeitet. Der Massedurchsatz betrug 150 kg/h. Die Massetemperatur wurde auf 210 °C eingestellt.

Folgende Materialeigenschaften wurden bestimmt:

| | |
|---|---|
| Zeitstand-Innenäruckversuch | nach ISO 1167, Anforderungen nach DIN 8078 |
| Schlagzähigkeit am Rohr | nach DIN 8078 |

Die Herstellbedingungen der Probekörper entsprachen in beiden Fällen den Anforderungen der ISO DIN 1873, Teil 2.

### Rohr:

Es wurde festgestellt, daß die Verarbeitung sehr gleichmäßig verlief und die Rohroberfläche sowohl innen als auch außen sehr glatt waren. Die Qualität der Rohroberfläche wurde charakterisiert, indem sie mit Rohren verglichen wurde, die aus einem Granulat mit enger Molmassenverteilung (s. Vergleichsbeispiel 2 M_{w}/Mₙ= 3.8) auf der gleichen Rohrextrusionsanlage unter gleichen Bedingungen gefertigt wurden.

Die Schlagzähigkeit der Rohre war gut und entsprach den Anforderungen nach DIN 8078 Abschnitt 3.5. Die Rohre wurden verschiedenen Zeitstand-Innendruckprüfungen entsprechend den Anforderungen der DIN 8078 unterzogen:

| Prüftemperatur | Prüfspannung | Mindeststandzeit (Soll) | erreichte Standzeit |
|---|---|---|---|
| 95 | 3,5 N/mm² | 1000 h | = 11443 h Prüfung abgeschlossen |

Die in DIN 8078 (Rohre aus PP) vorgeschriebenen Mindeststandszeiten für PP-H wurden mehr als deutlich überschritten. Die Rohre besaßen ein sehr gutes Zeitstandsverhalten und eine sehr glatte Oberfläche. Die Anforderung an die Schlagzähigkeit am Rohr nach DIN 8078 für PP-H wurde erfüllt.

### Beispiel 16

Das aus Beispiel 4 erhaltene Granulat wurde einer wässerigen Extraktion unterzogen. Dazu wurden 8 g des Granulats in einen gereinigten Erlenmeyerkolben gegeben und mit 250 ml geruchs- und geschmacksfreiem Wasser (z.B. Leitungswasser) aufgefüllt. Die Probe wurde im auf 70°C aufgeheiztem Wasserbad 4 h unter Rühren mittels Magnetrührer extrahiert. Die Extraktionslösung wurde in eine gereinigte mit Leitungswasser ausgespülte Steilbrustflasche dekantiert. Nach Abkühlen auf 25°C wurden aus dem Prüfwasser Verdünnungsreihen hergestellt. An diesen wurde durch ein Prüfpanel der Geruchsschwellenwert (GS) und der Geschmacksschwellenwert (GSS) gemäß der prEN 1420-1 (1994-08) bestimmt.

Es wurde ein Geruchsschwellenwert (GS)= 1 und ein Geschmacksschwellenwert (GSS) = 1 ermittelt, d.h. das Testwasser ist im Vergleich zum Vergleichswasser geruchs- und geschmacksfrei.

Das aus Beispiel 12/13 (Metallocen-PP) erhaltene extrudierte Rohr wurde einer wässerigen Extraktion unterzogen, indem das Rohr verschlossen wurde und mit geruchs- und geschmacksfreiem Wasser (z.B. Leitungswasser) gefüllt wurde. Das Wasser verblieb 72h bei 23°C stagnierend in dem Rohr und wird dann in eine gereinigte mit Leitungswasser ausgespülte Steilbrustflasche gefüllt. Der Kontaktversuch wurde dreimal wiederholt, so daß man drei Migrationswässer erhielt. An diesen wurde durch ein Prüfpanel der Geruchsschwellenwert (GS) und der Geschmacksschwellenwert (GSS) gemäß der prEN 1420-1 (1994-08) bestimmt.

Es wurde an der 1. Extraktion ein Geruchsschwellenwert (GS)= 1-2 und ein Geschmacksschwellenwert (GSS) = 1-2 ermittelt.

An der 2. und 3. Extraktion wurde ein Geruchsschwellenwert (GS)= 1 und ein Geschmacksschwellenwert (GSS) =1 ermittelt, d.h. das Testwasser war im Vergleich zum Vergleichswasser geruchs- und geschmacksfrei.

### Vergleichsbeispiel 3

Das aus Vergleichsbeispiel 2 hergestellte Granulat wurde der gleiche Prüfung wie in Beispiel 16 (Absatz 1) unterzogen. Es wurde ein Geruchsschwellenwert (GS)= 8 und ein Geschmacksschwellenwert (GSS) = 4-8 ermittelt. Das Wasser wies also im Vergleich zum Vergleichswasser einen deutlich wahrnehmbaren Geruch und Geschmack auf.

Das Rohr aus Vergleichsbeispiel 2 wurde einer wässerigen Extraktion unterzogen wie in Beispiel 16. Es wurde an der 1. Extraktion ein Geruchsschwellenwert (GS)= 8 und ein Geschmacksschwellenwert (GSS) = 4-8 ermittelt.

An der 2. und 3. Extraktion wurde ein Geruchsschwellenwert (GS)= 4-8 und ein Geschmacksschwellenwert (GSS) = 4 ermittelt, d.h. alle 3 Extraktionen wiesen im Vergleich zum Vergleichswasser einen deutlich wahrnehmbaren Geruch und Geschmack auf.

### Beispiel 17

Das aus Beispiel 12/13 erhaltene Rohr wurde einer Beurteilung des Geruchsverhaltens bei Temperatureinwirkung unterzogen. Die Prüfung wurde entsprechend der VDA-Richtlinie 270 vorgenommen (VDA = Verband der deutschen Automobilindustrie). Dazu wurden Rohrstücke mit einem Materialvolumen von 50 cm3 in einen gereinigten und geruchsfreien 11-Glasbehälter gegeben, der mit geruchsneutraler Dichtung und Deckel verschlossen wurde. Die Probe wurde anschließend 2h bei 80°C im Wärmeschrank gelagert. Das Prüfgefäß wurde nach der Entnahme aus dem Wärmeschrank bis auf eine Prüfraumtemperatur von 60°C abgekühlt, bevor die Geruchsbeurteilung erfolgt.

Es bestand folgende Bewertungsskala:

| | |
|---|---|
| Note 1 | nicht wahrnehmbar |
| Note 2 | wahrnehmbar, nicht störend |
| Note 3 | deutlich wahrnehmbar, aber nicht störend |
| Note 4 | störend |
| Note 5 | stark störend |
| Note 6 | unerträglich |

(Es können auch halbe Zwischennoten vergeben werden)

Die geprüften Rohrstücke erhielten die Note 1. Es war also kein Geruch wahrnehmbar.

### Vergleichsbeispiel 4

Rohrstücke aus Vergleichsbeispiel 3 wurden der Geruchsprüfung wie Beispiel 16 unterzogen. Es wurde die Note 4-5 ermittelt.

### Beispiel 18

### Herstellung von Extrusionsplatten

Die Extrusionsplatte stellte man in an sich bekannter Weise durch Extrusion aus der thermoplastischen Formmasse her. Dazu wurde das in Beispiel 12 beschriebene Polymerisat in einem Extruder bei Temperaturen von etwa 170-250°C aufgeschmolzen, homogenisiert und in einem Breitschlitzwerkzeug zu einem der Plattenbreite und Plattendicke entsprechenden Strang ausgeformt. Die Abkühlung und Ausformung erfolgte auf einem Drei-Walzen-Glättwerk und anschließender Rollenbahn in der für Polyolefine üblichen Weise. Die kontinuierlich produzierte Bahn wurde dann seitlich und in der Länge geschnitten.

Es wurden Tafeln und Platten in einer Dicke von 50 mm hergestellt.

Die so erhaltenen Platten wiesen folgende Eigenschaften auf.

Glatte glänzende Oberfläche
Zug-E-Modul nach ISO 527/2 = 1490 MPa
Kerbschlagzähigkeit nach Charpy bei 23°C, ISO 179/1eA = 9,8 kJ/m²

### Herstellung eines Vollstabs

Vollstäbe wurden als Halbzeuge für die spanende Weiterverarbeitung verwendet. Die Vollstäbe wurden in einem kontinuierlichen Prozeß durch Extrusion aus dem in Beispiel 12 erhaltenen Granulat hergestellt. Das Granulat wurde in einem Extruder bei Temperaturen von 170-250°C aufgeschmolzen. Anschließend wurde die Schmelze zunächst in einem Kalibrierrohr am Umfang stark gekühlt und anschließend in einem temperierten Wasserbad so lange gekühlt bis eine ausreichende Formsteifigkeit des Vollstabes erreicht wurde.

Es wurden Vollstäbe von einem Durchmesser von 500 mm hergestellt.

Die so erhaltenen Vollstäbe wiesen folgende Eigenschaften auf:
Geringes Eigenspannungsniveau
Zug-E-Modul nach ISO 527/2 = 1520 MPa
   (gemessen an gefrästen Probekörpern)
Kerbschlagzähigkeit, nach Charpy bei 23°C, ISO 179/1eA = 9.6 kJ/m²

### Herstellung einer Preßplatte

Preßplatten in einer Dicke von 50 mm wurden aus dem aus Beispiel 2 erhaltenen Granulat hergestellt.

Aufgrund des niedrigeren Schmelzpunktes konnten die Preßplatten mit einer kürzeren Aufheizzeit hergestellt werden. Z.B. bei einer 50 mm dicken Preßplatte verkürzte sich die Heizzeit von 240 min auf 200 min.

Die so erhaltenen Preßplatten wiesen folgende Eigenschaften auf:
Geringes Eigenspannungsniveau
Zug-E-Modul nach ISO 527/2 = 1480 MPa
   (gemessen an gefrästen Probekörpern)
Kerbschlagzähigkeit nach Charpy bei 23°C, ISO 179/1eA = 9.7 kJ/m²

### Beispiel 19

Es wurde verfahren wie in Beispiel 18, jedoch wurde das Granulat aus Beispiel 14 eingesetzt.

Die erhaltenen Extrusions-Platten wiesen folgende Eigenschaften auf:
Glatte glänzende Oberfläche
Zug-E-Modul nach ISO 527/2 = 1560 MPa
Kerbschlagzähigkeit nach Charpy bei 23°C, ISO 179/1eA = 9,5 kJ/m²

Die erhaltenen Vollstäbe wiesen folgende Eigenschaften auf:
Geringes Eigenspannungsniveau
Glatte glänzende Oberfläche
Zug-E-Modul nach ISO 527/2 = 1530 MPa
Kerbschlagzähigkeit nach Charpy bei 23°C, ISO 179/1eA = 9.6 kJ/m²

Die erhaltenen Preß-Platten wiesen folgende Eigenschaften auf:
Geringes Eigenspannungsniveau
Glatte glänzende Oberfläche
Zug-E-Modul nach ISO 527/2 = 1540 MPa
Kerbschlagzähigkeit nach Charpy bei 23°C, ISO 179/1eA = 9.3 kJ/m².

## Patentansprüche

1. Propylenpolymere mit 0 bis 2,5 Gew.-% C2- bis C10-Olefin-Comonomeren, einem Mw von 350.000 bis 1.000.000 g/mol, einem Mw/Mn von 4 bis 10, einem Gewichts-Anteil der Polymerfraktion mit einer Viskositätszahl von 500 bis 1400 ml/g von 20 bis 80 % am Gesamtpolymeren und einer Polymerfraktion mit einer Viskositätszahl 200 bis 400 ml/g, von 80 bis 20 % am Gesamtpolymeren und einer mittleren isotaktischen Sequenzlänge von 50 bis 100, erhältlich durch Polymerisation der Monomeren in Gegenwart eines Katalystorsystems, welches als Übergangsmetallkomponente ein Metallocen enthält.

2. Propylenhomopolymere nach den Anspruch 1.

3. Verwendung eines Propylenpolymers nach Anspruch 1 oder 2 zur Herstellung von Fasern, Folien und Formkörpern.

4. Verwendung nach Anspruch 3, wobei die Formkörper Hohlkörper sind.

5. Verwendung nach Anspruch 3, wobei die Formkörper, Rohre, Platten oder Halbzeuge sind.

6. Fasern, Folien und Formkörper aus Propylenpolymeren nach Anspruch 1 oder 2.

7. Formkörper nach Anspruch 6, wobei die Formkörper Rohre, Platten oder Halbzeuge sind.

8. Verwendung der Rohre gemäß Anspruch 7 für den Einsatz im chemischen Apparatebau, als Trinkwasserrohr oder als Abwasserrohr.

## Claims

1. A propylene polymer containing from 0 to 2.5% by weight of C₂-C₁₀-olefin comonomers and having an M_{w} of from 350,000 to 1,000,000 g/mol, an M_{w}/Mₙ of from 4 to 10, a proportion by weight of the polymer fraction having a viscosity number of from 500 to 1400 ml/g of from 20 to 80% of the total polymer and a proportion by weight of a polymer fraction having a viscosity number of from 200 to 400 ml/g of from 80 to 20% of the total polymer and an average isotactic sequence length of from 50 to 100, obtainable by polymerization of the monomers in the presence of a catalyst system comprising a metallocene as transition metal component.

2. A propylene homopolymer as claimed in claim 1.

3. The use of a propylene polymer as claimed in either of claims 1 and 2 for producing fibers, films and moldings.

4. The use as claimed in claim 3, wherein the moldings are hollow bodies.

5. The use as claimed in claim 3, wherein the moldings are tubes, plates or semifinished parts.

6. A fiber, film or molding comprising a propylene polymer as claimed in either of claims 1 and 2.

7. A molding as claimed in claim 6 which is a tube, plate or semifinished part.

8. The use of a tube as claimed in claim 7 in the construction of chemical apparatus, as drinking water pipe or as wastewater pipe.

## Revendications

1. Polymère du propylène, avec 0 à 2,5 % en poids de comonomères oléfiniques en C₂ à C₁₀, une masse moléculaire de 350 000 à 1 000 000 g/mole, un rapport Mw/Mn de 4 à 10, une proportion pondérale de la fraction polymère ayant un indice de viscosité de 500 à 1400 ml/g de 20 à 80 % par rapport au polymère total et une fraction polymère ayant un indice de viscosité de 200 à 400 ml/g de 80 à 20 % par rapport au polymère total, et une longueur moyenne de séquence isotactique de 50 à 100, pouvant être obtenu par polymérisation des monomères en présence d'un système catalyseur qui en tant que composant d'un métal de transition contient un métallocène.

2. Homopolymère du propylène selon la revendication 1.

3. Utilisation d'un polymère du propylène selon la revendication 1 ou 2 pour préparer des fibres, des feuilles ou des objets façonnés.

4. Utilisation selon la revendication 3, pour laquelle les objets façonnés sont des corps creux.

5. Utilisation selon la revendication 3, pour laquelle les objets façonnés sont des tubes, des plaques ou des semi-produits.

6. Fibres, feuilles et objets façonnés en un polymère du propylène selon la revendication 1 ou 2.

7. Objets façonnés selon la revendication 6, dans lesquels les objets façonnés sont des tubes, des plaques ou des semi-produits.

8. Utilisation des tubes selon la revendication 7 pour utilisation dans la construction d'appareils pour l'industrie chimique, en tant que tubes pour l'eau potable ou canalisations pour eaux résiduaires.
